# EUROPEAN PATENT SPECIFICATION

(11) **EP 2 665 623 B1**
(45) Date of publication and mention of the grant of the patent: **13.05.2015**
(21) Application number: 11819174.1
(22) Date of filing: 14.12.2011
(51) Int. Cl.: B60N 2/48

(54) **AUTOMOBILE SEAT WITH AUTOMATICALLY HEIGHT-ADJUSTABLE HEAD REST**
FAHRZEUGSITZ MIT AUTOMATISCH HÖHENVERSTELLBARER KOPFSTÜTZE
SIÈGE D'AUTOMOBILE DOTÉ D'UN APPUI-TÊTE AUTOMATIQUEMENT RÉGLABLE EN HAUTEUR

(30) Priority: 17.01.2011 SI 201100017 P
(43) Date of publication of application: 27.11.2013
(73) Proprietor: TPV D.D., 8000 Novo Mesto (SI)
(72) Inventor: MALNARIC, Vili, 8333 Semic (SI); MIHELIC, Primoz, 6000 Koper (SI); ZUPANC, Mirko, 8232 Sentrupert (SI); TRAMTE, Jernej, 8310 Sentjernej (SI); BLAZIC, Rajko, 8220 Smarjeske Toplice (SI); TARE, Vedran, 22000 Sibenik (HR)
(74) Representative: Borstar, Dusan
(86) International application number: PCT/SI2011/000076
(87) International publication number: WO 2012/099546

(56) References cited:
- EP-A2- 0 823 350
- EP-A2- 1 038 723
- EP-A2- 1 586 485
- CH-A- 27 570
- FR-A1- 2 749 812
- US-A1- 2001 043 005

## Description

The invention refers to an automobile seat with automatically height adjustable head rest. According to the International Patent Classification, such invention belongs to vehicles, namely to passenger accomodation and seats adapted for passengers, in particular to head rests and seats constructed to protect occupants from the effect of abnormal g-forces.

The purpose of the invention is to create such automobile seat with automatically height-adjustable head rest, where the concept of height-adjusting of the head rest, depending on each longitudinal displacement of the seat and by taking into consideration each anthropologic and ergonomic requirements in connection with typical users in certain population result, should result in such height-displacement of the head rest, where the distance between the head rest and the back of the head at the level of the center-of-mass of the head of each user is the lowest possible.

An automobile seat with automatically self-adjustable head rest is disclosed in JP 2004-352165. Such seat comprises a frame, namely a seat frame with a rail assembly and a rest frame together with a head rest. Said rail assembly is fixed to the vehicle body in the passenger area and is adapted to support and also to guide said seat frame, to which said rest frame is pivotally attached. The seat frame is displaceable along said rail assembly and can be also irrespective to position of the seat frame relative to the seat frame fixed in each desired position. A head rest is mounted in the top end portion of the rest frame, and is inserted within appropriate guides, by which it is then height-adjustable. In order to enable automatically height-adjusting of the head rest in dependency on each position of the seat frame, the head rest is furnished with a driving unit, which is via appropriate transmission means connected with the seat frame and the rail assembly. Consequently, each longitudinal displacement of the seat frame relative to said rail assembly results in appropriate height-displacement of the head rest, wherein the correlation between each displacement of the head rest and each longitudinal displacement of the seat frame is simply linear. As a matter of fact, a rack is mounted on said rail assembly for the purposes of cooperating with a gear, which is either directly or indirectly via corresponding shaft connected with a winding element for winding a cable, e.g. with a pulley or a drum, while the other free end portion of said rope is wound on the winding element in the area of the rest frame or the head rest, respectively. The lastly mentioned winding element is connected with a spindle, which cooperates with a nut, which is mounted in the head rest. In order to maintain the head rest in each desired position at a desired level obtained by turning said spindle, the pitch of the thread is relatively small and the spindle is a self-stopping one.

The purpose of such head rest is essentially to assure a sufficient support for a head of the passenger and to prevent the head from injuries in the case of unexpected rearward impact in the case of a rearward crash, wherein the efficiency of such protection merely depends on correct position of the head rest with respect to its altitude, and also on the distance between the head rest and the back of the passenger's head. Whenever the head rest is located too high or too low, or the distance between the head rest and the back of the passenger's head is too long, such protection may be completely inefficient.

Said solution pursuant to JP 2004-352165 generally enables automatically increasing the altitude of the head rest when e.g. a driver or a passenger with larger body height would move the seat correspondingly rearwards. On the contrary, by displacing the seat forwards, the head rest is correspondingly dropped. However, each displacement is performed in accordance with a previously mentioned linear correlation between each desired position of the seat frame and the head rest, wherein each possible displacement is also pretty limited due to said small pitch of the thread on the spindle due to achieving said self-stopping effect.

Each seat is generally available for users with various anthropologic properties or ergonomic requirements, which are by means of appropriate longitudinal displacement of the seat allowed to determine each appropriate distance between the seat and pedals and/or s steering wheel. When considering the previously exposed limitations in adjusting the head rest in the vertical direction, it is obvious that despite to regular adjustment of the seat frame in the longitudinal direction, when considering various anthropological conditions e.g. in various geographic regions, each obtained position of the head rest can easily be inappropriate, either too high or too low, which is the context of potentially providing a support for the head in the case of rearward impact insufficient per se, and which moreover also results in gaining correspondingly longer distance between the head rest and the back of the head, which among others leads to increasing the risk of injuries due to accelerations i.e. the forces, which may occur by rearward impacts e.g. by crash.

Automobile seat with automatically height-adjustable head rest is also disclosed in EP 1 038 723 A2, which is considered the closest prior art, EP 1 586 485 A2, EP 0 823 350 A2, FR 2 749 812 A1, US 2001/043005 A1 or CH 27 570 A.

The present invention refers to an automobile seat with automatically height-adjustable head rest, wherein such automobile seat comprising a seat frame, a rest frame, a guiding assembly and a head rest, and wherein
- said guiding assembly is formed by two longitudinally with respect to the vehicle extending guides, which are fixable to a vehicle body in the area of mounting each seat;
- said seat frame comprises at least a pair of lateral beams, which extend longitudinally with respect to the vehicle and are spaced apart from each other and firmly interconnected with each other by means of transversal spacers, wherein said seat frame is embedded within said guides of the guiding assembly with the possibility of being displaced along said guides and blocked in each desired position;
- said rest frame comprises at least a pair of lateral beams which are spaced apart from each other and firmly interconnected by means of transversal spacers, and is on its end portion apart from the seat frame furnished with guiding bushes, which are parallel to each other and at least approximately to said lateral beams and are moreover adapted to receive the head rest, wherein said rest frame is pivotally attached to the seat frame such that the rest frame can be pivoted relative to the seat frame and fixed in each desired position;
- said head rest comprises a body, which is inserted through said guiding bushes on the rest frame, as well as at least one longitudinal beam which is intended for displacing the head rest along said guiding bushes and relative to the rest frame; and wherein
- a transmission assembly comprises at least one flexible transmission element suitable for transferring longitudinal displacements of the seat frame relative to each guide towards the area of the longitudinal beam for the purposes of displacing the body of the head rest along said guiding bushes and relative to the rest frame.

Said transmission assembly is conceived in such a manner that each forward or rearward displacement of the seat frame relative to said guides of the guiding assembly is transferred into the area in which the head rest is embedded on the rest frame, namely via at least one flexible transmission element and at least one compensation assembly, wherein each displacement of said seat frame relative to the guides is simultaneously followed with a displacement of the head rest relative to the rest frame, the length and/or time dependency of which is different from the length and/or time dependency of said displacement of the seat frame relative to the guide. The body of the head rest is displaceable along at least one of said guiding bushes and relative to the rest frame either in a step-like or in a continuous manner.

In accordance with the invention, said transmission assembly comprises a curved coulisse guide, which is arranged adjacent to said guide of the seat frame and is firmly connected thereon, wherein said coulisse guide is designed in such a manner that, when observed in the longitudinal direction of said guides of the seat frame, the distance between said coulisse guide and said guides of the seat frame is changing in a pre-defined manner, and wherein a slider is inserted within said coulisse guide and is attached to one of the transversal spacers of the seat frame with the possibility of being displaced along said transversal spacer, and at least one of said transmission elements is attached thereto, which is intended to transform each displacement of the seat frame relative to each of said guides into a desired displacement of the head rest relative to the rest frame and which is on the other hand connected with the longitudinal beam for displacing the head rest. In this, two transmission elements can be foreseen in the form of Bowden, each of them comprising a cable and a wrapper, wherein the cables are each per se connected on the one hand to one of opposite end portions of said slider and on the other hand to one of opposite end portions of said longitudinal beam which is used for displacing the head rest. Besides, at least one of said cables can be connected with said slider via the compensation assembly, which is adapted at least for the purposes maintaining of each required tension of each of the cables of the transmission elements.

The invention will be described in more detail on the basis of an embodiment, which is presented in the attached drawings, wherein
- Fig.1: is a schematically presented perspective view of an automobile seat with automatically height-adjustable head rest;
- Fig.2: is a schematic detailed view of connection of a transmission assembly to a seat frame of the seat according to Fig. 1;
- Fig.3: is a schematic detailed view of connection of a transmission assembly and a rest frame and a head rest of the seat according to Fig. 1;
- Fig.4: is a schematically presented perspective view of the automobile seat with an automatically height-adjustable head rest according to the invention;
- Fig.5: is a schematic detailed view of connection of a transmission assembly and a guide of the seat according to Fig. 4;
- Fig.6: is a schematically presented perspective view of a further non-claimed embodiment of the automobile seat with an automatically height-adjustable head rest;
- Fig.7: is a schematic detailed view of connection of a transmission assembly and a rest frame and a head rest of the seat according to Fig. 6;
- Fig.8: is a transmission ratio transforming element of the transmission assembly according to Fig. 7;
- Fig.9: is a schematically presented perspective view of a still further non-claimed embodiment of the automobile seat with an automatically height-adjustable head rest;
- Fig.10: is perspective view of a compensation assembly of the transmission assembly according to Fig. 9;
- Fig.11: is a longitudinal cross-section of a compensation assembly of the transmission assembly according to Fig. 9;
- Fig.12: is a schematically presented perspective view of another embodiment of the automobile seat with an automatically height-adjustable head rest;
- Fig.13: is a perspective view of a compensation assembly of the transmission assembly according to Fig. 12; and
- Fig.14: is a longitudinal cross-section of a compensation assembly of the transmission means according to Fig. 12.

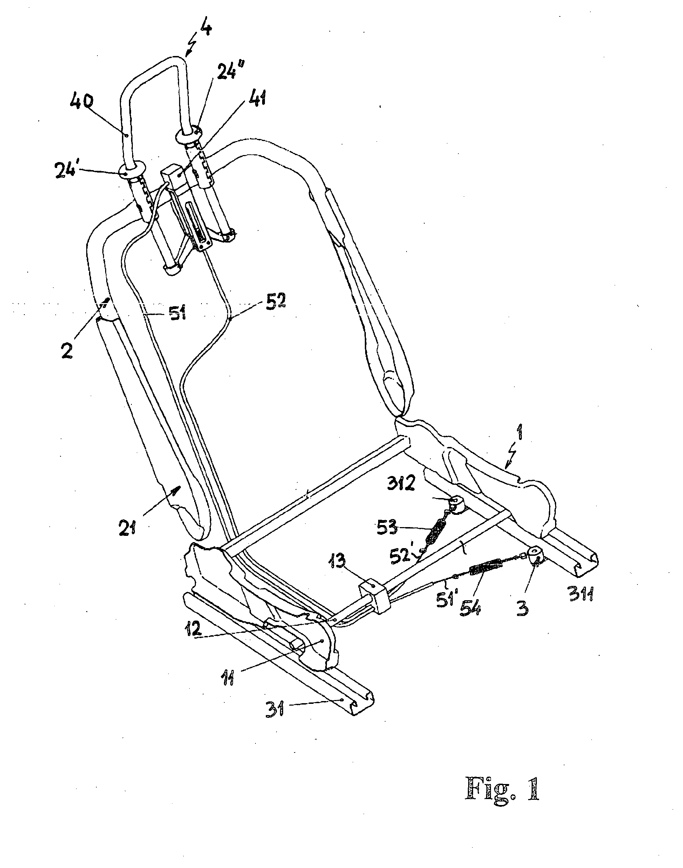

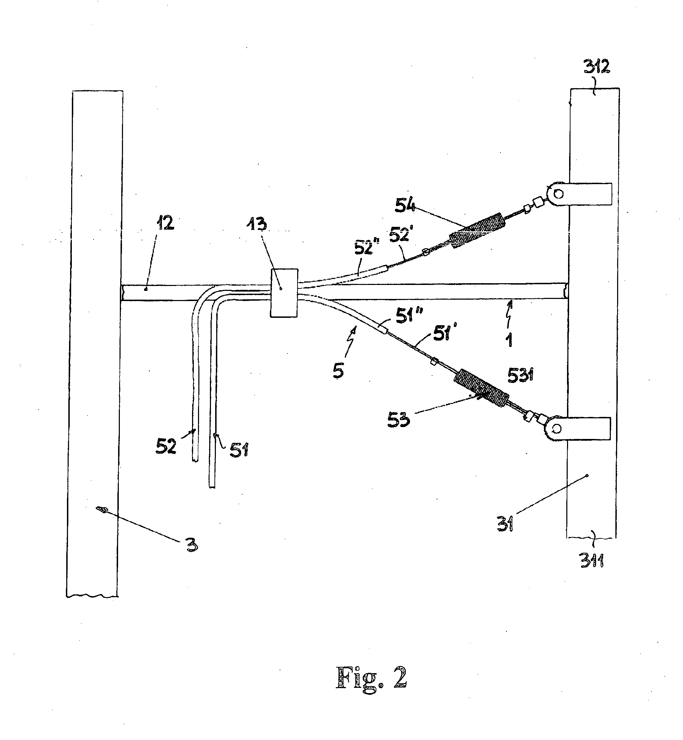

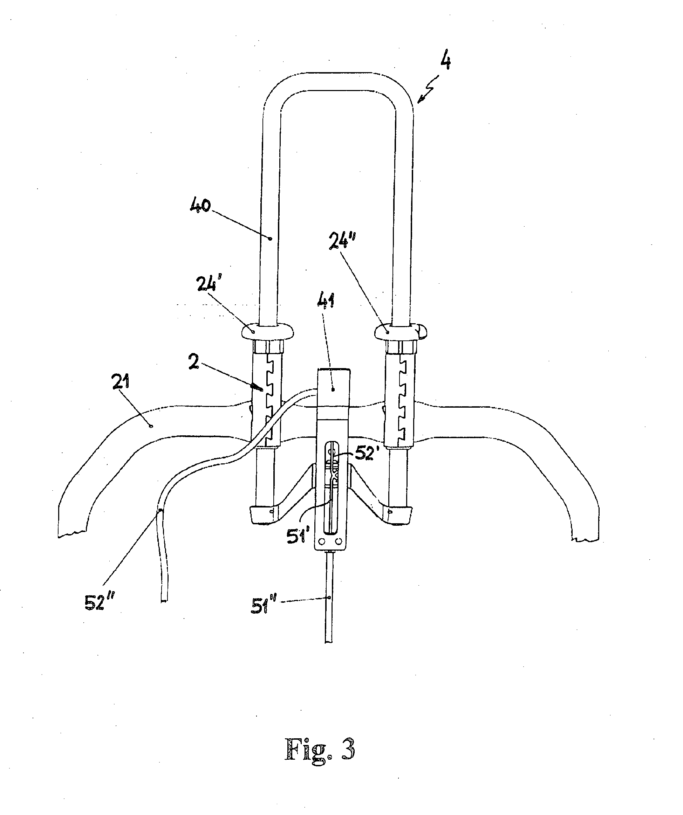

An automobile seat with automatically height-adjustable head rest 4 according to Figs. 1 - 3 consists of a seat frame 1, a rest frame 2, a guiding assembly 3 as well as of a head rest 4.

Said guiding assembly 3 is formed by at least two guides 31, which extend in the longitudinal direction of each vehicle and are attached to a body of said vehicle in the area of mounting each seat.

Said seat frame 1 preferably consists of at least a pair of lateral beams 11, which each per se extend in the longitudinal direction of the vehicle and are spaced apart from each other and firmly interconnected to each other by means of transversal spacers 12, and is guided within said guides 31 of the guiding assembly 3 with the possibility of being displaced along said guides and blocked in each desired position.

Said rest frame 2 preferably consists of at least a pair of lateral beams 21, which each per se extend in the longitudinal direction of the vehicle and are spaced apart from each other and firmly interconnected to each other by means of transversal spacers 22, and is on its end area located apart from the seat frame 1 furnished with a pair of guiding bushes 24', 24", which extend essential parallel with respect to each other and said lateral beams 21 and are intended to receive said head rest 4, wherein said rest frame 2 is pivotally connected with said seat frame 1 and can be pivoted relative to the seat frame and fixed in each desired position.

The head rest 4 consists of a base 40, which is inserted throughout said guiding bushes 24', 24" of the rest frame 2, as well as of at least one longitudinal beam 41, which is adapted for the purposes of displacing the head rest 4 relative to the rest frame 2 along said guiding bushes 24', 24". At least one of said guiding bushes 24' 24" is adapted to cooperate with the base 40 of the head rest 4 either in a step-like or continuous manner, which means that said base 40 is allowed to move along said guiding bushes 24', 24" either continuously or in a step-like manner.

Said transmission assembly 5 generally comprises at least one flexible transmission element 51, 52 for the purpose of transmission of longitudinal displacements of the seat frame 1 relative to each belonging guide 31 of the guiding assembly towards the area of said longitudinal beam 41 for the purposes of displacing the base 40 of the head rest 4 along said guiding bushes 24', 24" relative to the rest frame 2. Said transmission assembly 5 is conceived in such manner that each displacement of the seat in the forward or rearward direction relative to the guides 31 of the guiding assembly 3 is via corresponding transmission elements 51, 52, 53, 54, 55, namely via at least one flexible transmission element 51, 52 and at least one compensation assembly 53, 54 and/or at least one transmission ratio transforming element 55 which is functioning as a ratio reducing or as a ratio multiplying means, transferred into the area of placing the head rest 4 onto the rest frame 2, so that each displacement of the seat frame 1 relative to the guides 31 is followed by simultaneous displacement of the head rest 4 relative to the rest frame, the length i.e. the extent of which and/or the time dependency however differ from the length i.e. extent of said displacement of the seat frame 1 relative to the guide 31. The transmission assembly 5 comprises two flexible transmission elements 51, 52 in the form of Bowden. Each Bowden consists of a cable 51', 52' and a wrapper 51", 52". Both transmission elements 51, 52 are in the area of said wrappers 51", 52" together attached to a fixation point 13 in the area of the seat frame 1, which is in this particular case located on the transversal spacer 12. Said cables 51', 52' of the transmission elements 51, 52 are on the one hand each per se attached on the front end portion 311 and the rear end portion 312 of the guide 31 and on the other hand on at least one end portion of said longitudinal beam 41 serving for displacing the base 40 of the head rest 4 along the guiding bushes 24', 24" of the rest frame 2. When the seat frame 1 is displaced forward or rearward, due to such triangular fixation of the transmission elements 51, 52 the head rest 4 is displaced upwards or downwards, where by each rearward displacement of the seat frame 1 the cable 51' is pulled out from the belonging wrapper 51", which in the longitudinal beam 41 results in a corresponding displacement of the body 40 of the head rest 4 in the upward direction i.e. away from the rest frame 2. In a particularly preferred manner, each of said cables 51', 52' of the transmission elements 51, 52 is interconnected with said guide 31 via a compensation element 53, 54. According to Figs. 1 - 3, each of said compensation elements 53, 54 is formed by a tension spring with a pre-determined characteristic elasticity. Each compensation assembly 53, 54 is on the one hand intended for the purposes of maintaining a required tension of each corresponding cable 51', 52', and on the other hand for the purposes of transforming of the transmission ratio at least within the initial and final area of the trajectory of displacing the seat frame 1, so that e.g. within said areas e.g. small and pre-determined displacements of the seat frame 1 can be performed practically without displacing the head rest 4.

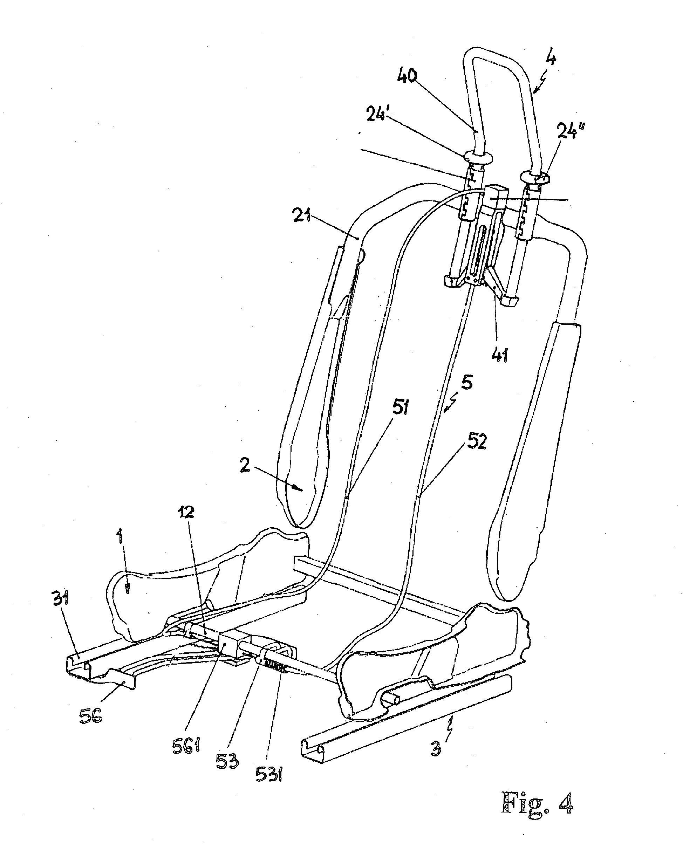

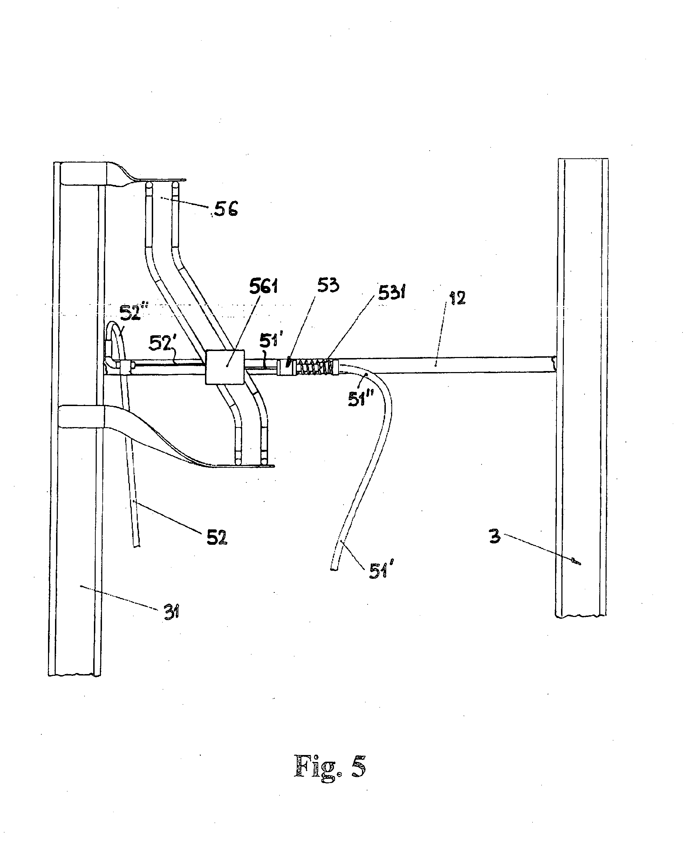

In the embodiment according to the invention, which is shown in Figs 4 and 5, the seat frame 1 is also displaceable along the guides 31 of the guiding assembly 3, and the head rest 4 is by means of the transmission assembly 5, depending on displacement of said seat frame 1 relative to the guides 31, displaceable within the guiding bushes 24', 24" on the rest frame 2 in a direction towards the last or away from it. In this, said transmission assembly 5 is furnished with appropriate coulisse guide 56, which is located adjacent to the guide 31 of the seat frame 1 and firmly attached thereto. Said coulisse guide 56 is designed in such a manner that, when observed in the longitudinal direction of the guide 31 of the seat frame 1, the distance between said coulisse guide 56 and said guide 31 is changing. A slider 561 is inserted within said coulisse guide 56 and is attached to the transversal spacer 12 with the possibility of being displaced along said transversal spacer 12.

When displacing said seat frame 1 forward or rearward along the belonging guide 31, said slider 561 is displaced along said coulisse guide 56 and simultaneously also along the transversal spacer 12 of the seat frame 1. Two transmission elements 51, 52 are foreseen, each of them in the form of Bowden comprising a cable 51', 52' and a wrapper 51", 52". Both cables 51', 52' are each per se attached on the one hand to said slider 561 and on the other hand on said longitudinal beam 41, which is used for displacing the head rest 4. In this, the cable 51' is connected with said slider 561 via a compensating assembly 53, which is in this case furnished with a compression spring 531 and is intended mainly to maintain the cables 51', 52' of the transmission elements 51, 52 in appropriately tensioned state. As evident in Figs. 4 and 5, by displacing the seat frame 1 rearwards the cable 52' is pulled and the base 40 of the head rest 4 is displaced in a direction away from the rest frame 2.

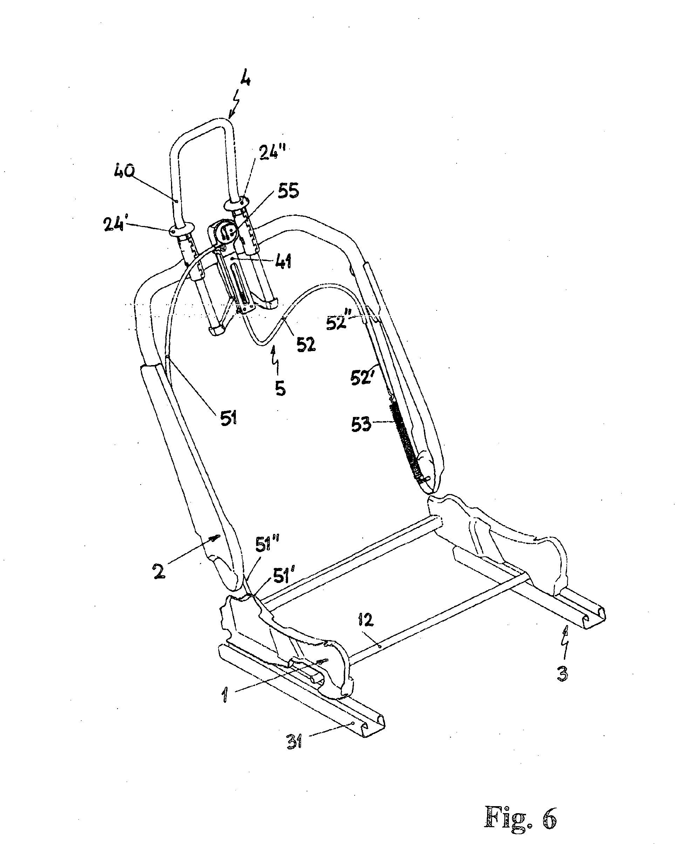

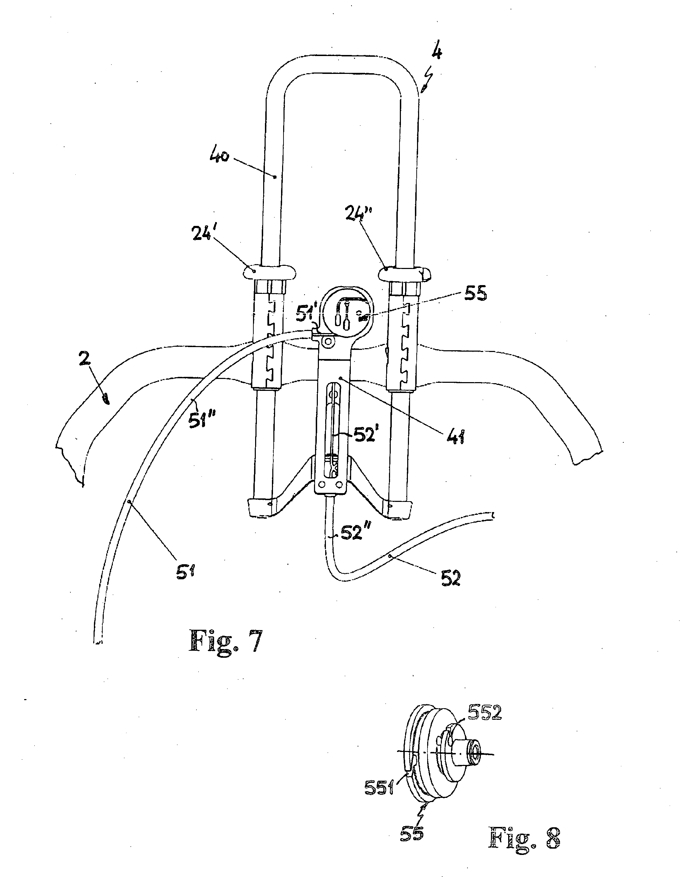

According to a further possible aspect of an automobile seat, which is shown in Figs. 6 - 8, and which is not a part of claimed invention, the seat frame 1 is displaceable along the guides 31 of the guiding assembly 3, and the head rest 4 is thanks to the transmission assembly 5 and depending on displacement of said seat frame 1 relative to the guide 31 displaceable within the bushes 24', 24" on the rest frame 2 in a direction towards the last of apart from it. The transmission assembly 5 comprises a transmission element 55 as well as an appropriate compensation assembly 53. Said transmission element 55 is adapted to cooperate with two transmission elements 51, 52, so that the transmission ratio by transferring displacements of the seat frame 1 relative to the belonging guide 31 for the purposes of displacing the head rest 4 via the first transmission element 51 differs from the transmission ratio by transferring displacements of the seat frame 1 relative to the belonging guide 31 for the purposes of displacing the head rest 4 via the second transmission element 52, wherein each difference is compensated by means of the compensation assembly 53. The transmission ratio transforming element 55 is preferably available in the form of a disc which is with the possibility of freely rotating mounted onto the longitudinal beam 41 of the head rest and is furnished with two connecting areas 551, 552, which are adapted for connection with corresponding cables 51', 52' of the transmission elements 51, 52 and are located at different diameters. Each of said transmission elements 51, 52 is available as a bowden consisting of a cable 51', 52' and a wrapper 51', 52". The wrapper 51" of the first transmission element 51 is attached to the seat frame 1, and one end portion of the belonging cable 51' of said first transmission element 51 is attached to the guide 31, while the residual end portion of said cable 51' is attached to the first connecting area 551 of said transmission ratio transforming element 55. The cable 52' of the second transmission element 52 is by its one end portion attached to the second connecting area 552 of said transmission ratio transforming element 55, and by its second end portion via the compensation assembly 53 to the seat frame 1. The ratio between diameters on which said connecting areas 551, 552 are located on said transmission ratio transforming clement 55, is approximately 1 : 3. The compensation assembly 53 is a relatively strong tension spring, which takes care about a required compensation of the cables 51, 52' of the transmission elements 51, 52 and at the same time also for providing each required reverse displacements of the head rest 4.

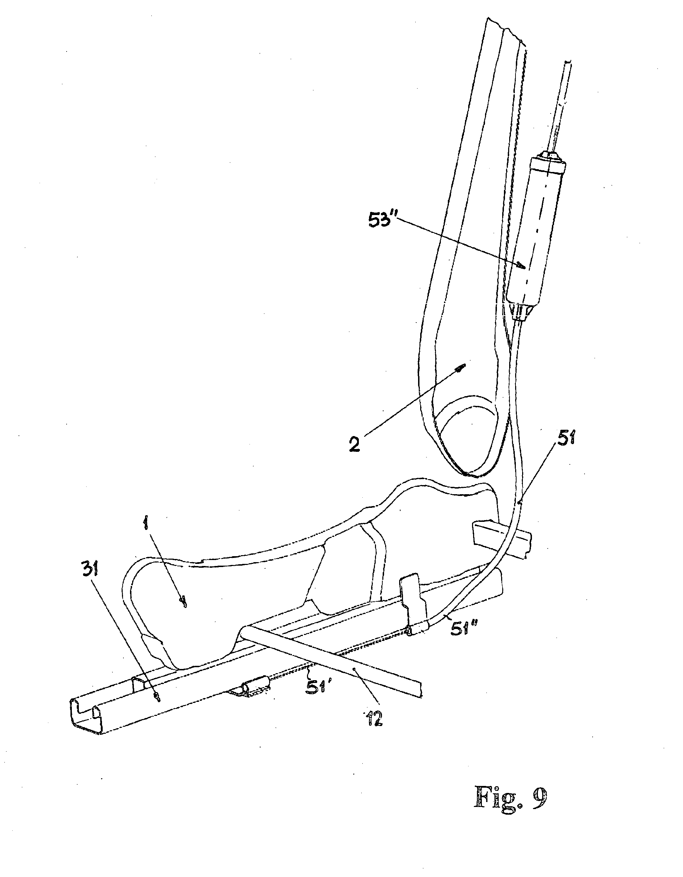

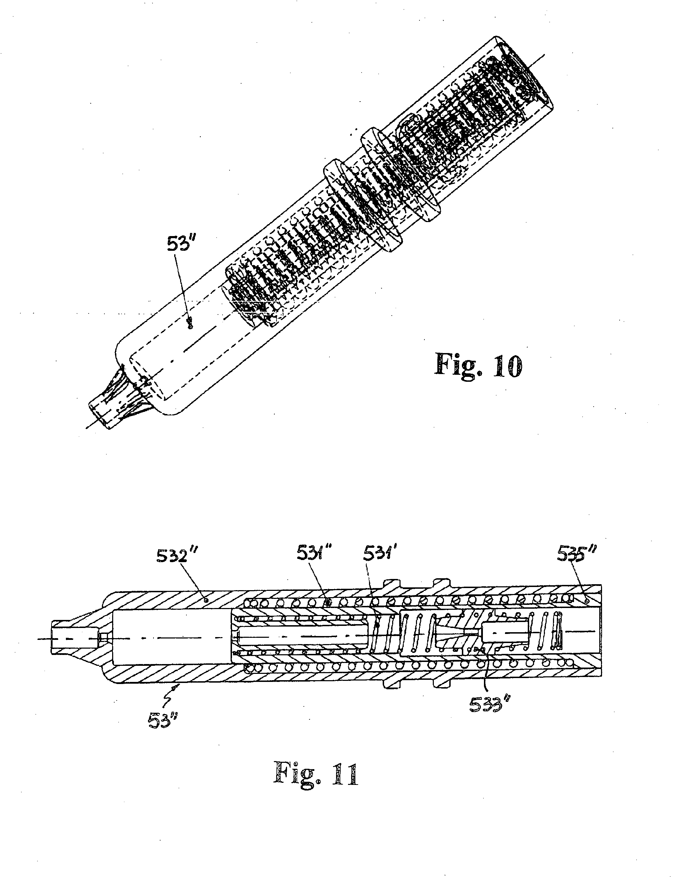

According to a still further possible aspect of an automobile seat, which is presented in Figs. 9 - 11 and which is not a part of claimed invention, each displacement of the head rest 4 relative to each available displacement of the seat frame 1 is obtained in such a manner that during the initial stage of displacing the seat frame 1 the head rest 4 is not displaced, upon which by continued displacing of the seat frame 1 the head rest 4 is displaced rapidly, and the head rest 4 reaches its end position at maximal distance apart from the rest frame 2 before the seat frame 1 is brought into its end position on the guide 31, namely into a position on the rear end portion 312 of the guide 31. To this aim, the seat frame 1 is allowed to be displaced along the guide 31 of the guiding assembly 3, by which the head rest 4 is thanks to the transmission assembly 5 depending on displacing said seat frame 1 relative to the guide 31, displaccable within the bushes 24' 24" on the rest frame 2 towards the last or in a direction away from it. Again, the transmission assembly 5 comprises a transmission ratio transforming element 55, which also in this case completely corresponds to that one, which is shown in Figs. 6 - 8, and is of that reason not separately shown in Figs. 9 - 11, as well as a compensation assembly 53, which is available as a double compensation assembly 53".

The transmission ratio transforming element 55 is adapted to cooperate with two transmission elements 51, 52, so that the transmission ratio of transforming displacements of the seat frame 1 relative to the belonging guide 31 into displacements of the head rest 4 via the first transmission element 51 differs from the transmission ratio of transforming displacements of the seat frame 1 relative to the belonging guide 31 into displacements of the head rest 4 via the second transmission element 52, wherein each difference is compensated by means of said double transmission assembly 53". Like in Figs. 6 - 8, the transmission ratio transforming element 55 is available in the form of a disc, which is freely rotatable mounted onto the head rest 4 and furnished with two connecting areas 551, 552, which are each per se adapted for interconnection with cables 51', 52' of the transmission elements 51, 52 and are located at different diameters. Each transmission element 51, 52 is a Bowden consisting of a cable 51' 52' and a wrapper 51", 52". The wrapper 51" of the first transmission element 51 is attached to the seat frame 1, and the first end portion of the cable 51' of the first transmission element 51 is attached to the guide 31, while the residual end portion of said rope 51' is attached to the first connecting area 551 of the transmission ratio transforming element 55. The second transmission element 52 is by means of the first end portion of its cable 52' attached to the second connecting area 552 of the transmission ratio transforming element 55, and by means of the second end portion of its cable 52' via said double transmission assembly 53" to the seat frame 1. Said connecting areas 551, 552 are located at different diameters in the ratio approximately 1 : 3.

The double compensation assembly 53" comprises an external tubular casing 532', within which a relatively strong external compression spring 531' is inserted, to which an axially movable tubular slider 535" is rest, within which a smaller internal compression spring 531" is inserted, to which a further slider 533" is rest, which is independently with regard to previously mentioned slider 535" axially displaccable and connectable with each disposable cable 51', 52' of the transmission element 51, 52.

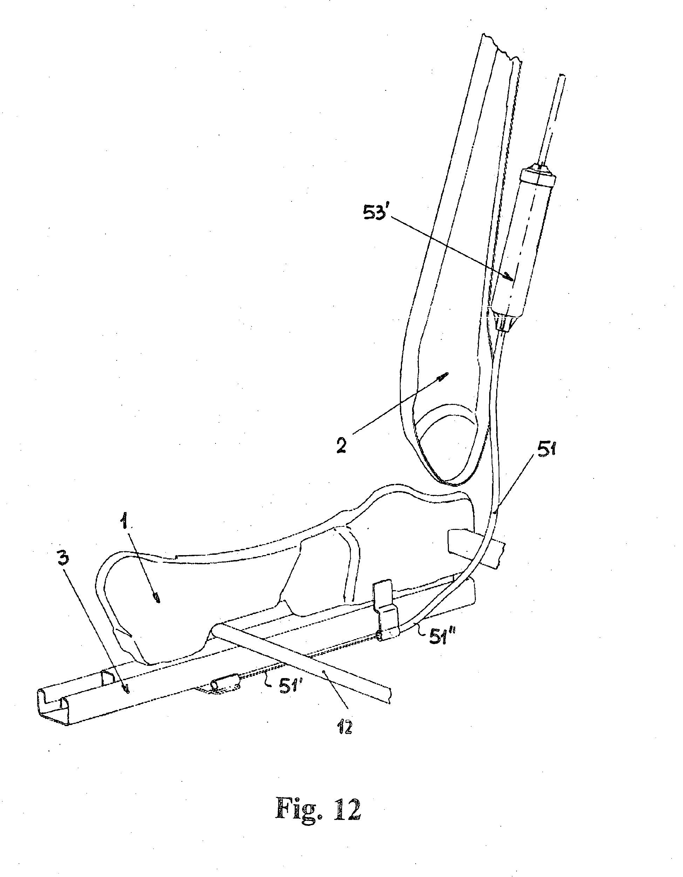

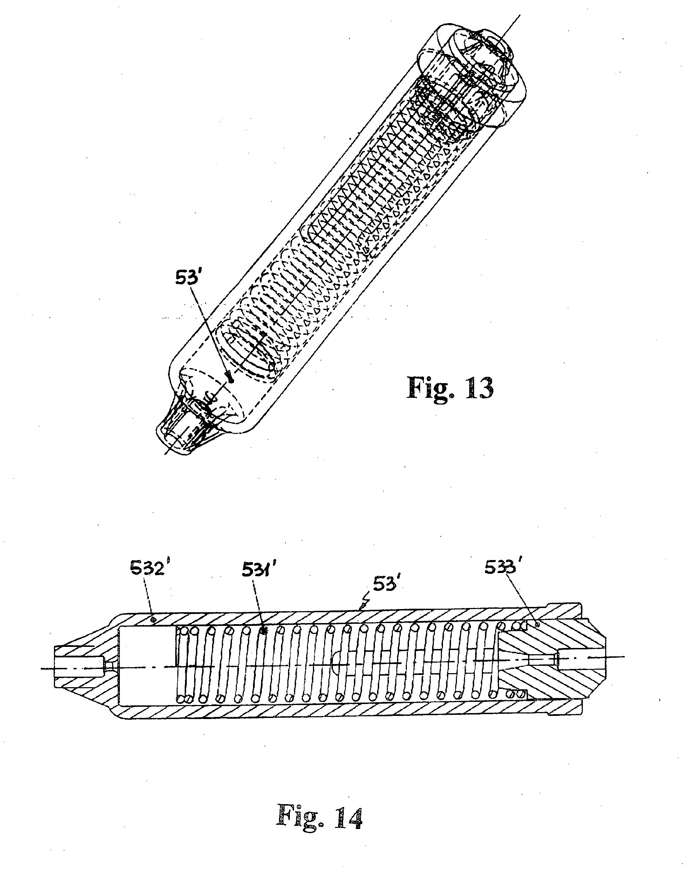

According to a still further possible aspect of an automobile seat, which is presented in Figs. 12 - 14 and which is not a part of claimed invention, each displacement of the head rest 4 relative to the seat frame 1 is performed in such a manner that during the initial stage of displacing the seat frame 1, the head rest 4 is not displaced, which is however later by continued displacing of said seat frame 1 followed by rapidly displacing the head rest 4, which is then brought into its end position at the maximal distance apart from the rest frame 2 prior to displacing the seat frame 1 into its end position within the guide 31, namely to its end position on the rear end portion 312 f the guide 31. To this aim, the seat frame 1 is movable along the guide 31 of the guiding assembly 3, and the head rest 4 is thanks to the transmission assembly 5 and depending on each displacement of said seat frame 1 relative to the guide 31 displaced along the bushes 24', 24" on the rest frame 2 in a direction towards the last of away from it. Said transmission assembly 5 comprises a transmission ratio transforming element 55, which completely corresponds to that one, which is shown in Figs. 6 - 8, and is of that reason not separately shown in Figs. 12 - 14, and a compensation assembly 53, which is in this embodiment a single compensation assembly 53'.

The transmission ratio transforming element 55 is adapted to cooperate with two transmission elements 51, 52, so that the transmission ratio of transforming displacements of the seat frame 1 relative to the belonging guide 31 into displacements of the head rest 4 via the first transmission element 51 differs from the transmission ratio of transforming displacements of the seat frame 1 relative to the belonging guide 31 into displacements of the head rest 4 via the second transmission element 52, wherein each difference is compensated by means of said single transmission assembly 53'. Like in Figs. 6 - 8, the transmission ratio transforming element 55 is available in the form of a disc, which is freely rotatable mounted onto the head rest 4 and furnished with two connecting areas 551, 552, which are each per se adapted for interconnection with cables 51', 52' of the transmission elements 51, 52 and are located at different diameters. Each transmission element 51, 52 is a bowden consisting of a cable 51' 52' and a wrapper 51", 52". The wrapper 51" of the first transmission element 51 is attached to the seat frame 1, and the first end portion of the cable 51' of the first transmission element 51 is attached to the guide 31, while the residual end portion of said rope 51' is attached to the first connecting area 551 of the transmission ratio transforming element 55. The second transmission element 52 is by means of the first end portion of its cable 52' attached to the second connecting area 552 of the transmission ratio transforming element 55, and by means of the second end portion of its cable 52' via said double transmission assembly 53" to the seat frame 1. Said connecting areas 551, 552 are located at different diameters in the ratio approximately 1 : 3.

Said single compensation element 53' consists of a tubular casing 532', within which a compression spring 531' is inserted, on which a slider 533' is rest, which is inserted within said casing 532' and is axially movable relative to it and is moreover connectable with the cable 51' 52' of each respective transmission element 51, 52.

## Claims

1. Vehicle seat with automatically height-adjustable head rest (4), said vehicle seat comprising a seat frame (1), a rest frame (2), a guiding assembly (3) and a head rest (4), wherein
- said guiding assembly (3) is formed by two longitudinally with respect to the vehicle extending guides (31), which are fixable to a vehicle body in the area of mounting each seat;
- said seat frame (1) comprises at least a pair of lateral beams (11), which extend longitudinally with respect to the vehicle and are spaced apart from each other and firmly interconnected with each other by means of transversal spacers (12), wherein said seat frame (1) is embedded within said guides (31) of the guiding assembly (3) with the possibility of being displaced along said guides (31) and blocked in each desired position;
- said rest frame (2) comprises at least a pair of lateral beams (21), which are spaced apart from each other and firmly interconnected by means of transversal spacers (22), and it is on its end portion apart from the seat frame (1) furnished with guiding bushes (24', 24"), which are parallel to each other and at least approximately to said lateral beams (21) and are moreover adapted to receive the head rest (4), wherein said rest frame (2) is pivotally attached to the seat frame (1) such that the rest frame (2) can be pivoted relative to the seat frame (1) and fixed in each desired position;
- said head rest (4) comprises a body (40), which is inserted through said guiding bushes (24', 24") on the rest frame (2), as well as at least one longitudinal beam (41) which is intended for displacing the head rest (4) along said guiding bushes (24', 24") and relative to the rest frame (2);
- wherein a transmission assembly (5) comprises at least one flexible transmission element (51, 52) suitable for transferring longitudinal displacements of the seat frame (1) relative to each guide (31) towards the area of the longitudinal beam (41) for the purposes of displacing the body (40) of the head rest (4) along said guiding bushes (24', 24") and relative to the rest frame (2),
and wherein said transmission assembly (5) is conceived in such a manner that each forward or rearward displacement of the seat frame (1) relative to said guides (31) of the guiding assembly (3) is transferred into the area in which the head rest (4) is embedded on the rest frame (2) via at least one flexible transmission element (51, 52) and at least one compensation assembly (53), wherein each displacement of said seat frame (1) relative to the guides (31) is simultaneously followed with a displacement of the head rest (4) relative to the rest frame (2), the length and/or time dependency of which is different from the length and/or time dependency of said displacement of the seat frame (1) relative to the guide (31),
and moreover the body (40) of the head rest (4) is displaceable along at least one of said guiding bushes (24', 24 ") and relative to the rest frame (2) either in a step-like manner or in a continuous manner,
**characterized in that** the transmission assembly (5) comprises a curved coulisse guide (56), which is arranged adjacent to said guide (31) of the seat frame (1) and is firmly connected thereon, wherein said coulisse guide (56) is designed in such a manner that, when observed in the longitudinal direction of said guides (31) of the seat frame (1), the distance between said coulisse guide (56) and said guides (31) of the seat frame (1) is changing in a predefined manner, and wherein a slider (561) is inserted within said coulisse guide (56) and is attached to one of the transversal spacers (12) of the seat frame (1) with the possibility of being displaced along said transversal spacer (12) and at least one of said transmission elements (51, 52) is attached thereto, which is intended to transform each displacement of the seat frame (1) relative to each of said guides (31) into a desired displacement of the head rest (4) relative to the rest frame (2) and which is on the other hand connected with the longitudinal beam (41) for displacing the head rest (4).

2. Vehicle seat according to Claim 1, **characterized in that** two transmission elements (51, 52) are foreseen in the form of Bowden, each of them comprising a cable (51', 52') and a wrapper (51", 52"), wherein the cables (51', 52') are each per se connected on the one hand to one of opposite end portions of said slider (561) and on the other hand to one of opposite end portions of said longitudinal beam (41) which is used for displacing the head rest (4).

3. Vehicle seat according to Claim 2, **characterized in that** at least one of said cables (51', 52') is connected with said slider (561) via the compensation assembly (53, 54), which is adapted at least for the purpose of maintaining the required tension of the cables (51', 52') of each of the transmission elements (51, 52).

## Patentansprüche

1. Fahrzeugsitz mit automatisch höhenverstellbarer Kopfstütze (4), wobei der Fahrzeugsitz einen Sitzrahmen (1), einen Lehnenrahmen (2), eine Führungsanordnung (3) und eine Kopfstütze (4) aufweist, wobei
- die Führungsanordnung (3) durch zwei sich in Längsrichtung relativ zum Fahrzeug erstreckenden Führungen (31), die an einer Fahrzeugkarosserie im Bereich der Befestigung jedes Sitzes befestigt werden können, ausgebildet ist;
- der Sitzrahmen (1) mindestens ein Paar von seitlichen Trägern (11) aufweist, die sich in Längsrichtung in Bezug zum Fahrzeug erstrecken und voneinander beabstandet und mittels transversaler Abstandhalter (12) fest miteinander verbunden sind, wobei der Sitzrahmen (1) in den Führungen (31) der Führungsanordnung (3) eingebettet ist, wobei es möglich ist, ihn entlang den Führungen (31) zu verschieben und in jeder gewünschten Position zu sperren;
- wobei der Lehnenrahmen (2) mindestens ein Paar von seitlichen Trägern (21) aufweist, die voneinander beabstandet sind und mittels transversaler Abstandhalter (22) fest miteinander verbunden sind, und der an seinem Endabschnitt beabstandet vom Sitzrahmen (1) mit Führungsbuchsen (24', 24") versehen ist, die zueinander parallel und zumindest annähernd parallel zu den seitlichen Trägern (21) sind und darüber hinaus so gestaltet sind, um die Kopfstütze (4) aufzunehmen, wobei der Lehnenrahmen (2) schwenkbar an dem Sitzrahmen (1) befestigt ist, so dass der Lehnenrahmen (2) relativ zum Sitzrahmen (1) geschwenkt und in jeder gewünschten Position befestigt werden kann;
- wobei die Kopfstütze (4) einen Körper (40) aufweist, der durch die Führungsbuchsen (24', 24") am Lehnenrahmen (2) eingeführt wird, sowie mindestens einen Längsträger (41), der dazu bestimmt ist, die Kopfstütze (4) entlang den Führungsbuchsen (24', 24") und relativ zum Lehnenrahmen (2) zu verschieben;
- wobei eine Übertragungsanordnung (5) mindestens ein flexibles Übertragungselement (51, 52) aufweist, das zum Übertragen von Längsverschiebungen des Sitzrahmens (1) relativ zu jeder Führung (31) in Richtung des Bereichs des Längsträgers (41) zum Zwecke der Verschiebung des Körpers (40) der Kopfstütze (4) entlang den Führungsbuchsen (24', 24") und relativ zum Lehnenrahmen (2) geeignet ist,
- und wobei die Übertragungsanordnung (5) so ausgestaltet ist, dass jede Vorwärts- oder Rückwärtsverschiebung des Sitzrahmens (1) relativ zu den Führungen (31) der Führungsanordnung (3) über mindestens ein flexibles Übertragungselement (51, 52) und mindestens eine Kompensationsanordnung (53) in den Bereich übertragen wird, in dem die Kopfstütze (4) auf dem Lehnenrahmen (2) eingebettet ist, wobei auf jede Verschiebung des Sitzrahmens (1) relativ zu den Führungen (31) zur gleichen Zeit eine Verschiebung der Kopfstütze (4) relativ zum Lehnenrahmen (2) folgt, wobei dessen Länge und/oder Zeitabhängigkeit anders als die Länge und/oder Zeitabhängigkeit der Verschiebung des Sitzrahmens (1) relativ zur Führung (31) ist,
und darüber hinaus der Körper (40) der Kopfstütze (4) entweder schrittweise oder auf kontinuierliche Weise entlang mindestens einer der Führungsbuchsen (24', 24") und relativ zum Lehnenrahmen (2) verschiebbar ist,
dadurch gekennzeichet, dass die Übertragungsanordnung (5) eine gebogene Kulissenführung (56) aufweist, die neben der Führung (31) des Sitzrahmens (1) angeordnet und fest damit verbunden ist, wobei die Kulissenführung (56) derart ausgestaltet ist, dass in Längsrichtung der Führungen (31) des Sitzrahmens (1) gesehen der Abstand zwischen der Kulissenführung (56) und den Führungen (31) des Sitzrahmens (1) sich auf vorgegebene Art und Weise ändert, und wobei ein Schieber (561) in die Kulissenführung (56) eingeführt und an einem der transversalen Abstandhalter (12) des Sitzrahmens (1) befestigt ist, wobei es möglich ist, dass er entlang dem transversalen Abstandhalter (12) verschoben wird und mindestens eines der Übertragungselemente (51, 52) daran befestigt ist, das dazu bestimmt ist, jede Verschiebung des Sitzrahmens (1) relativ zu jeder der Führungen (31) in eine gewünschte Verschiebung der Kopfstütze (4) relativ zu dem Lehnenrahmen (2) umzuwandeln, und das andererseits mit dem Längsträger (41) zur Verschiebung der Kopfstütze (4) verbunden ist.

2. Fahrzeugsitz gemäß Anspruch 1, dadurch gekennzeichet, dass zwei Übertragungselemente (51, 52) nach dem Bowdenzugprinzip vorgesehen sind, wobei jedes von ihnen ein Seil (51', 52') und eine Umhüllung (51", 52") aufweist, wobei die Seile (51', 52') jedes für sich einerseits an einem der entgegengesetzten Endabschnitte des Schiebers (561) und andererseits an einem der entgegengesetzten Endabschnitte des Längsträgers (41) angeschlossen sind, der zum Verschieben der Kopfstütze (4) verwendet wird.

3. Fahrzeugsitz gemäß Anspruch 2, **dadurch gekennzeichnet, dass** mindestens eines der Seile (51', 52') mit dem Schieber (561) über die Kompensationsanordnung (53, 54) verbunden ist, die zumindest zum Zwecke der Erhaltung der erforderlichen Spannung der Seile (51', 52') eines jeden der Übertragungselemente (51, 52) ausgebildet ist.

## Revendications

1. Siège de véhicule doté d'un appui-tête (4) automatiquement réglable en hauteur, ledit siège de véhicule comprenant un cadre (1) de siège, un cadre (2) d'appui, un ensemble de guidage (3) et un appui-tête (4), dans lequel
- ledit ensemble de guidage (3) est formé par deux guides (31) s'étendant longitudinalement par rapport au véhicule, qui peuvent être fixés à une carrosserie de véhicule dans la région de montage de chaque siège ;
- ledit cadre (1) de siège comprend au moins une paire de traverses latérales (11), qui s'étendent longitudinalement par rapport au véhicule et sont espacées l'une de l'autre et solidement reliées l'une à l'autre à l'aide d'entretoises transversales (12), ledit cadre (1) de siège étant incorporé dans lesdits guides (31) de l'ensemble de guidage (3) avec la possibilité d'être déplacé le long desdits guides (31) et bloqué dans chaque position souhaitée ;
- ledit cadre (2) d'appui comprend au moins une paire de traverses latérales (21), qui sont espacées l'une de l'autre et solidement reliées l'une à l'autre à l'aide d'entretoises transversales (22), et il est équipé, sur sa partie d'extrémité éloignée du cadre (1) de siège, de manchons de guidage (24', 24"), qui sont parallèles les uns aux autres et au moins approximativement auxdites traverses latérales (21) et sont de plus conçus pour recevoir l'appui-tête (4), ledit cadre (2) d'appui étant fixé pivotant au cadre (1) de siège de sorte que le cadre (2) d'appui puisse pivoter par rapport au cadre (1) de siège et fixé dans chaque position souhaitée
- ledit appui-tête (4) comprend un corps (40), qui est introduit dans lesdits manchons de guidage (24', 24") sur le cadre (2) d'appui, ainsi qu'au moins une traverse longitudinale (41) qui est destinée à déplacer l'appui-tête (4) le long desdits manchons de guidage (24', 24") et par rapport au cadre (2) d'appui ;
- dans lequel un ensemble de transmission (5) comprend au moins un élément de transmission flexible (51, 52) approprié pour transférer les déplacements longitudinaux du cadre (1) de siège par rapport à chaque guide (31) vers la région de la traverse longitudinale (41) dans le but de déplacer le corps (40) de l'appui-tête (4) le long desdits manchons de guidage (24', 24") et par rapport au cadre (2) d'appui,
et dans lequel ledit ensemble de transmission (5) est conçu d'une manière telle que chaque déplacement vers l'avant ou vers l'arrière du cadre (1) de siège par rapport auxdits guides (31) de l'ensemble de guidage (3) soit transféré dans la région dans laquelle l'appui-tête (4) est incorporé sur le cadre (2) d'appui par le biais d'au moins un élément de transmission flexible (51, 52) et d'au moins un ensemble de compensation (53), dans lequel chaque déplacement dudit cadre (1) de siège par rapport aux guides (31) est simultanément suivi d'un déplacement de l'appui-tête (4) par rapport au cadre (2) d'appui, dont la longueur et/ou la dépendance temporelle sont différentes de la longueur et/ou la dépendance temporelle dudit déplacement du cadre (1) de siège par rapport au guide (31),
et en plus le corps (40) de l'appui-tête (4) peut être déplacé le long d'au moins un desdits manchons de guidage (24', 24") et par rapport au cadre (2) d'appui soit de façon progressive soit de façon continue,
**caractérisé en ce que** l'ensemble de transmission (5) comprend un guide de coulissement incurvé (56), qui est agencé adjacent audit guide (31) du cadre (1) de siège et est solidement relié à celui-ci, ledit guide de coulissement (56) étant conçu d'une manière telle que, quand on l'observe dans la direction longitudinale desdits guides (31) du cadre (1) de siège, la distance entre ledit guide de coulissement (56) et lesdits guides (31) du cadre (1) de siège change d'une manière prédéfinie, et dans lequel un coulisseau (561) est introduit dans ledit guide de coulissement (56) et est fixé à l'une des entretoises transversales (12) du cadre (1) de siège avec la possibilité d'être déplacé le long de ladite entretoise transversale (12) et au moins un desdits éléments de transmission (51, 52) y est fixé, lequel est destiné à transformer chaque déplacement du cadre (1) de siège par rapport à chacun desdits guides (31) en un déplacement souhaité de l'appui-tête (4) par rapport au cadre (2) d'appui et qui est, d'autre part, relié à la traverse longitudinale (41) pour déplacer l'appui-tête (4).

2. Siège de véhicule selon la revendication 1, **caractérisé en ce que** deux éléments de transmission (51, 52) sont prévus sous la forme de Bowden, chacun d'eux comprenant un câble (51', 52') et une gaine (51", 52"), dans lequel les câbles (51', 52') sont en soi chacun reliés, d'une part, à l'une des parties d'extrémité opposées dudit coulisseau (561) et, d'autre part, à l'une des parties d'extrémité opposées de ladite traverse longitudinale (41) qui est utilisée pour déplacer l'appui-tête (4).

3. Siège de véhicule selon la revendication 2, **caractérisé en ce qu'**au moins un desdits câbles (51', 52') est relié audit coulisseau (561) par le biais de l'ensemble de compensation (53, 54), qui est conçu au moins dans le but de maintenir la tension nécessaire des câbles (51', 52') de chacun des éléments de transmission (51, 52).
